# EUROPEAN PATENT APPLICATION

(11) **EP 1 343 281 A1**
(43) Date of publication of application: **10.09.2003**
(21) Application number: 03003286.6
(22) Date of filing: 24.02.2003
(51) Int. Cl.: H04L 12/56, H04Q 7/32

(54) **Management of a network access point with auxiliary transceivers in a bluetooth piconet**

(30) Priority: 25.02.2002 JP 2002048238
(71) Applicant: Kabushiki Kaisha Toshiba, Tokyo 105-8001 (JP)
(72) Inventor: Chihoko, Yahiro, Toshiba K.K., Intell.Prop.Div., Minato-ku, Tokyo 105-8001 (JP)
(74) Representative: Henkel, Feiler, Hänzel

(57) **Abstract**

A control unit (11) performs control to save information acquired by any of a plurality of wireless units (16-1 to 16-n) in a RAM (13) as shared information (13c) which can be utilized by all of the plurality of wireless units (16-1 to 16-n) and manage it.

## Description

The present invention relates to a wireless communication device which is applied to a system comprising a plurality of devices including wireless units capable of two-way communication, a wireless communication system, and a device configuring method for an information processing system. More specifically, the present invention relates to a wireless communication device which is suitable for configuring an information processing system which transmits/receives arbitrary multimedia information such as sounds or videos by connecting a plurality of devices existing therearound by a wireless connection technique of a predetermined standard, a wireless communication system, and a device configuring method for an information processing system.

When a plurality of devices each comprising wireless units enabling two-way communication configure an information processing system which transmits/receives arbitrary information such as sounds or videos based on two-way wireless communication, a Bluetooth function enhanced module is widely applied as a wireless connection technique.

In this Bluetooth technique, the ISM (Industrial Scientific Medical) band of 2.4 GHz band is used as is well known. A frequency hopping mode based on spread spectrum transmission is applied in this Bluetooth technique. As a result, short-distance wireless communication within 10 to 100 m is enabled, and up to eight devices can be connected to each other by time division multiplexing. In this connection, a network called a pico-net is formed between the respective devices. In this network, one device functions as a parent device, and other devices function as child devices.

Further, as a conventional device comprising a plurality of wireless units, there is a "wireless communication apparatus" disclosed in, e.g., Jpn. Pat. Appln. KOKAI Publication No. 8-107381. In this wireless communication apparatus, the quality of the received signal of one wireless unit selected from a plurality of wireless units is compared with a reference value. If the reception state is good as a result of comparison, supply of power to all the remaining wireless units is interrupted. If the reception state is not good, the wireless communication apparatus controls to restart the supply of power to the other wireless units.

However, the existing wireless communication technique including the above prior art has a function structure that one device performs communication with another device based on point-to-point connection by constantly using one wireless unit. Therefore, it is difficult to effectively exploit a wireless frequency band given to the devices. Furthermore, when configuring the information processing system which processes multimedia information with a plurality of devices based on wireless connection, there is a problem that the degree of freedom of the structure and performance of the entire system are restricted to narrow ranges, thereby the flexibility is insufficient. This mainly occurs due to restriction in the number of devices capable of wireless connection, the processing load of the wireless units and other factors.

In an embodiment of the present invention, there is provided a wireless communication device capable of two-way communication, comprising: a plurality of wireless units, each of which can operate individually and has an equivalent function; and a control unit which has an information management apparatus which stores and manages information acquired by any of the plurality of wireless units in such a manner that the information can be utilized by all of the plurality of wireless units, and controls the plurality of wireless units.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a structure of an information processing apparatus including a wireless communication function in an embodiment according to the present invention;
FIG. 2 is a block diagram showing one structural example of a wireless unit in the embodiment;
FIG. 3 is an operation explanatory view for illustrating the operation when acquiring shared information in the embodiment;
FIG. 4 is a view showing an example of the shared information in the embodiment;
FIG. 5 is a view showing an example of a wireless unit management table in the embodiment;
FIG. 6 is a flowchart showing wireless unit determination processing and wireless unit management table update processing procedures involved therewith in the embodiment;
FIG. 7 is an operation explanatory view showing a communication state example using a plurality of wireless units in the embodiment;
FIG. 8 is an operation explanatory view showing a communication state example using a plurality of wireless units in the embodiment; and
FIG. 9 is an operation explanatory view showing a communication state example using a plurality of wireless units in the embodiment.

An embodiment according to the present invention will now be described hereinafter with reference to the accompanying drawings.

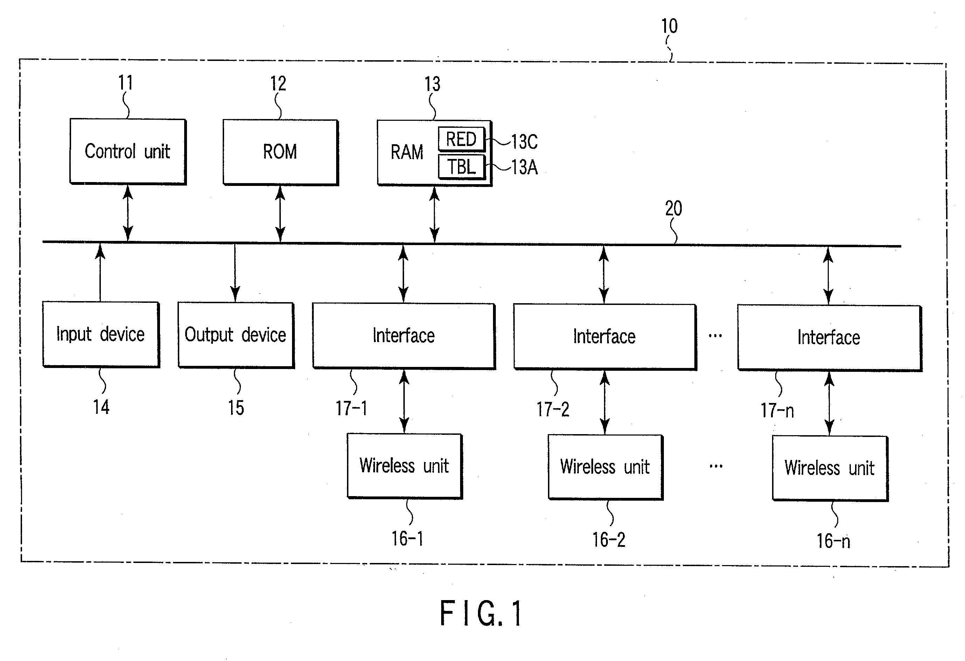

FIG. 1 is a block diagram showing a structure of an information processing apparatus including a wireless communication function in the embodiment.

The information processing apparatus 10 including the wireless communication function shown in FIG. 1 is comprised of a control unit 11, a ROM 12, a RAM 13, an input device 14, an output device 15, wireless units 16-1 to 16-n, and wireless module interfaces 17-1 to 17-n.

In the respective components, for example, the ROM 12, the RAM 13, the input device 14, the output device 15 and the wireless module interfaces 17-1 to 17-n are connected to the control unit 11 via a system bus 20. The wireless module interfaces 17-1 to 17-n are respectively associated with the plurality of wireless units 16-1 to 16-n. The wireless unit 16-k (k = 1, ..., n) is connected to the control unit 11 via the wireless module interface 17-k. As a result, the wireless unit 16-k transmits/receives information to/from the control unit 11 independently from other wireless units 16-m (m ≠ k).

In the respective components in the information processing apparatus 10, the control unit 11 is realized by a CPU. The control unit 11 controls the entire apparatus. Specifically, the control unit 11 manages each of the plurality of wireless units 16-1 to 16-n as a target of control. The control unit 11 generates a wireless unit management table 13A which indicates the load states of the respective wireless units 16-1 to 16-n and their specific contents on the RAM 13 and manages it in order to manage the plurality of wireless units 16-1 to 16-n as a target of control. The control unit 11 makes reference to the wireless unit management table 13A when operating the wireless unit 16-k in response to a request from a user. The control unit 11 updates the wireless unit management table 13A when the wireless unit is selected and activated for communication.

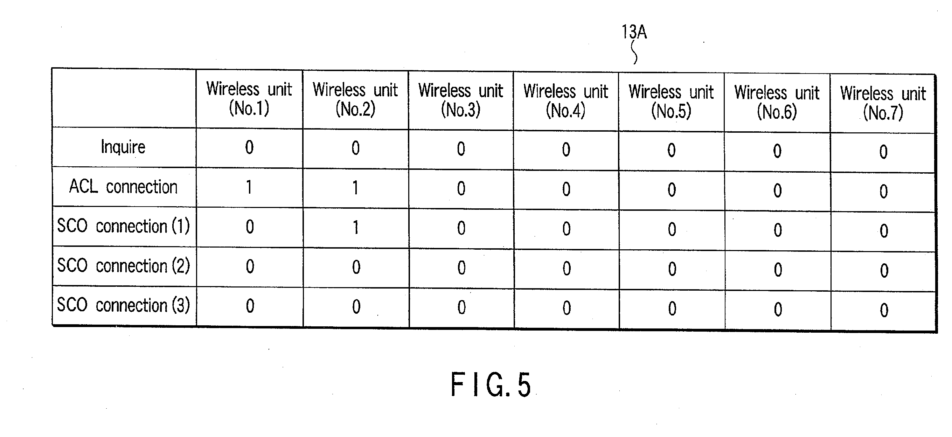

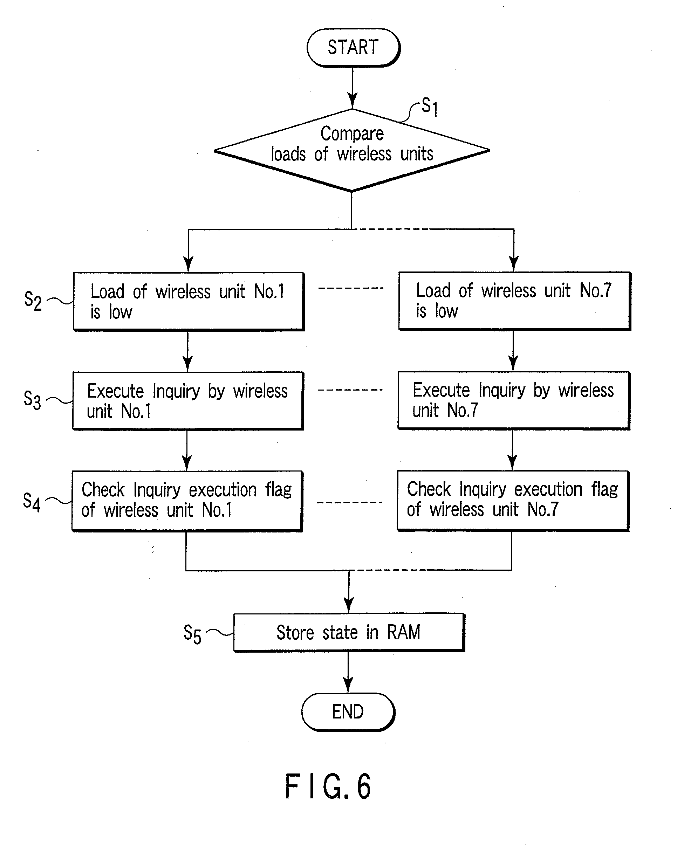

FIG. 5 shows an example of the wireless unit management table 13A. FIG. 6 shows respective processing procedures of determination processing for determining the wireless unit by making reference to the wireless unit management table 13A and table update processing. A concrete example of the wireless unit management table 13A shown in FIG. 5 and a concrete example of the judgment processing illustrated in FIG. 6 will be described later.

Moreover, the control unit 11 operates as an information management device which performs the control to save and manage information acquired by any of the plurality of wireless units 16-1 to 16-n in such a manner that the information can be used by all of the plurality of wireless units 16-1 to 16-n. In the present embodiment, the control unit 11 stores in the RAM 13 the information acquired by one or a plurality of other devices therearound as shared information 13c which can be used by all of the plurality of wireless units 16-1 to 16-n when any of the plurality of wireless units 16-1 to 16-n executes an "inquiry". As a result, when each of the wireless units 16-1 to 16-n performs connection processing, it can make reference to the shared information 13c. FIG. 4 shows an example of the shared information 13c. The concrete content of the shared information 13c shown in FIG. 4 will be described in detail later.

The ROM 12 stores various kinds of programs required for the operation of the CPU constituting the control unit 11. In this embodiment, the following programs are stored in the ROM 12: a program which is stored in the RAM 13 and used to manage the shared information 13c, as shown in FIG. 4; a program which is stored in the RAM 13 and used to generate and manage the wireless unit management table 13A, as shown in FIG. 5; and a program for judgment processing, as shown in FIG. 6. The control unit 11 executes processing according to the programs stored in the ROM 12.

The RAM 13 is used as a storage area of programs executed by the control unit 11 and a work area which temporarily stores data during execution of programs, for example. Concretely, under control of the control unit 11, the shared information 13c shown in FIG. 4, the wireless unit management table 13A shown in FIG. 5 and others are stored in the RAM 13, for example.

Man-machine interfaces are realized by the input device 14 and the output device 15 constitute. The input device 14 is realized by an operation input device such as a keyboard, a pointing device including a mouse, an acupoint, a pen or the like, and acquires direction input information according to operation by the user. In addition, the output device 15 is realized by an output device such as a display or a speaker, and provides the user with information about the processing result according to a direction from the user.

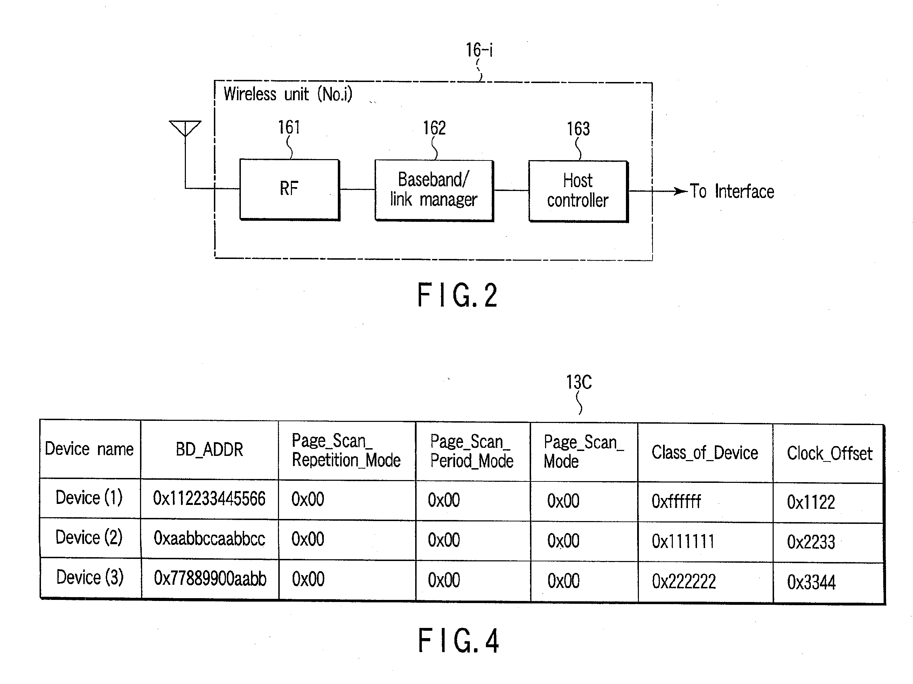

Under control of the control unit 11, the wireless units 16-1 to 16-n are individually activated and perform two-way wireless communication with other peripheral devices. The concrete structure and function of the wireless units 16-1 to 16-n will be described later with reference to FIG. 2.

The wireless module interfaces 17-1 to 17-n individually connect the plurality of wireless units 16-1 to 16-n to the system bus 20 respectively. As a result, information can be transmitted and received between the respective wireless units 16-1 to 16-n and the control unit 11.

FIG. 2 is a block diagram showing a structural example of the wireless units 16-1 to 16-n. The wireless units 16-1 to 16-n are realized by wireless communication modules, each of which has the same function for individually carrying out two-way wireless communication, respectively. In the present embodiment, the wireless units 16-1 to 16-n are realized by Bluetooth modules.

Each of the wireless units 16-1 to 16-n consists of an RF transceiver 161, a baseband chip (Baseband/LinkManager) 162 and a host CPU (Host Controller) 163.

The RF transceiver 161 receives a wireless signal in accordance with a predetermined frequency and executes processing to demodulate the signal into a baseband signal and processing to modulate the baseband signal and transmit it as a wireless signal in accordance with a predetermined communication frequency. The baseband chip 162 mainly puts data from a host layer protocol in a payload of a packet and carries out various kinds of digital signal processing required for the baseband signal. Additionally, the baseband chip 162 carries out processing to extract data in the payload part of the packet required for the host layer protocol from the received signal from the RF transceiver 161. The host CPU 163 controls each link layer and transmits/receives information to/from the control unit 11.

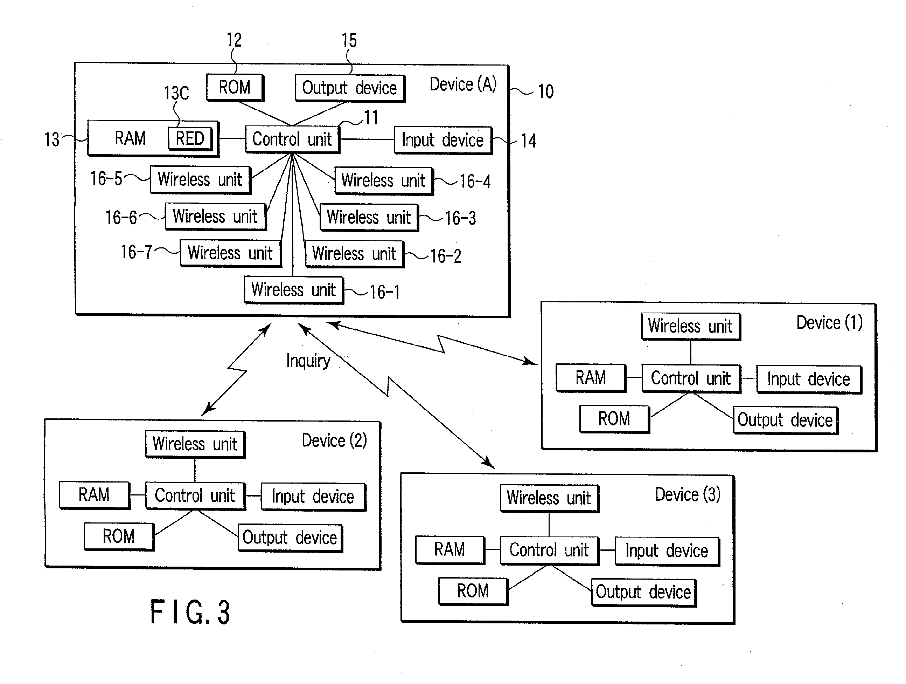

FIG. 3 is an operation explanatory view for illustrating the operation when acquiring the shared information 13c in this embodiment, and like reference numerals denote parts equivalent to those in FIG. 1, thereby omitting the explanation. In the embodiment shown in FIG. 3, an example of processing of the information processing apparatus 10 including the wireless communication function described in FIG. 1 is illustrated. More specifically, in the plurality of wireless units 16-1 to 16-n(n = 7 in this example) realized by the Bluetooth modules, when one wireless unit 16-1 executes an "inquiry", the control unit 11 stores information acquired by other devices existing therearound (Bluetooth devices (1) to (3)) in the RAM 13 as the shared information 13c in this example.

Bluetooth devices (1) to (3) have a control unit 21, a wireless unit 22, a RAM 23, a ROM 24, an input device 25, and an output device 26, respectively. The control unit 21 is connected to the wireless unit 22, RAM 23, ROM 24, input device 25, and output device 26.

FIG. 4 shows an example of the shared information 13c stored in the RAM 13 by the processing of an "inquiry" such as illustrated in FIG. 3. Here, an example of a result of the "inquiry" based on Bluetooth is shown.

FIG. 5 shows an example of the wireless unit management table 13A generated by the control unit 11 based on information acquired by transmitting/receiving information with the respective host CPUs (Host Controllers) 163 of the plurality of wireless units 16-1 to 16-n. When the value of a flag is "1" (namely, the flag is on) in the respective wireless units 16-1 to 16-7 (No. 1 to No. 7), it means that the communication connection with the flag is being executed. In the example of the wireless unit management table 13A shown in FIG. 5, there are shown the state that the wireless unit 16-1 (No. 1) is conducting ACL connection with an arbitrary device (device i) and the state that the wireless unit 16-2 (No. 2) is executing ACL connection and SCO connection with an arbitrary device (device j). Under the condition, when an "inquiry" is executed in response to a direction from a user, the control unit 11 makes reference to the wireless unit management table 13A illustrated in FIG. 5. Further, the control unit 11 carries out the "inquiry" by using any of wireless units 16-3 to 16-7 (No. 3 to No. 7) other than wireless unit 16-1 (No. 1) and wireless unit 16-2 (No. 2).

FIG. 6 is a flowchart showing processing procedures when the control unit 11 determines a wireless unit to perform communication connection by making reference to the wireless unit management table 13A stored in the RAM 13 and updates the wireless unit management table 13A in the RAM 13.

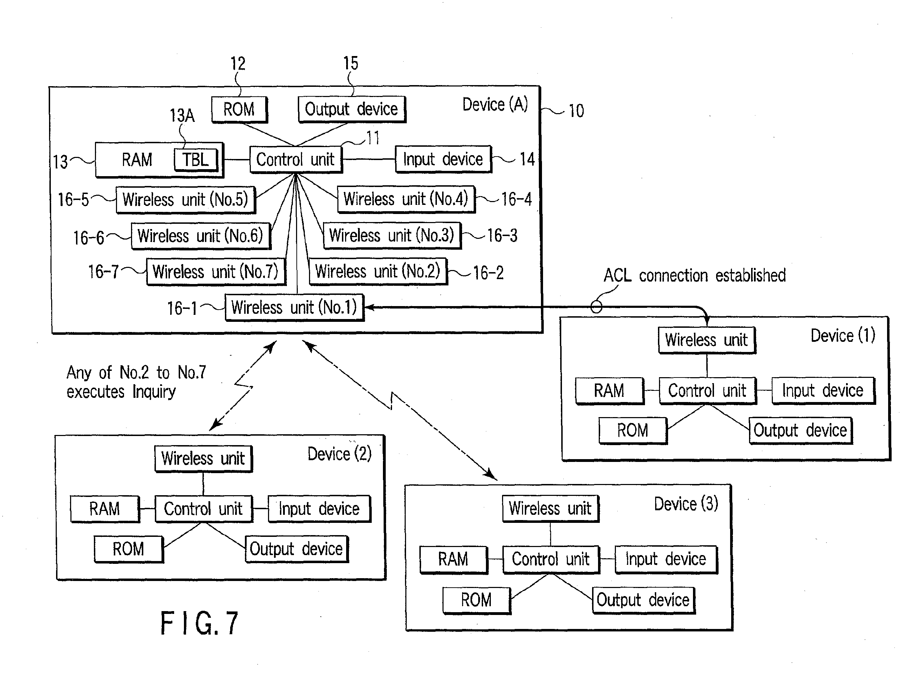

FIGS. 7 to 9 are operation explanatory views showing the state that the control unit 11 effectively exploits the plurality of wireless units 16-1 to 16-n and performs communication with a plurality of other devices existing therearound by making reference to the wireless unit management table 13A in the RAM 13. A plurality of other devices herein are indicated as Bluetooth devices (1) to (3).

Here, the operation in this embodiment according to the present invention will now be described with reference to each drawing.

It is assumed that, for example, seven wireless units 16-1 to 16-7 constituted by Bluetooth modules such as shown in FIG. 2 are provided in the information processing apparatus 10 having the wireless communication function.

It is assumed that one wireless unit 16-1 in the plurality of wireless units 16-1 to 16-n provided in the information processing apparatus 10 performs an "inquiry" in order to check devices (Bluetooth devices) existing therearound in accordance with the Bluetooth standard. FIG. 3 shows an example of the "inquiry".

Information on the result of the "inquiry" with respect to execution of the "inquiry" is provided from the host CPU (Host Controller) 163 of the wireless unit 16-1 to the control unit 11 via the wireless module interface 17-1 and the system bus 20.

Upon receiving the information on the result of the "inquiry" from the host CPU (Host Controller) 163 of the wireless unit 16-1, the control unit 11 stores the information in the RAM 13 as the shared information 13c which can be utilized by all the wireless units 16-1 to 16-7. FIG. 4 shows an example of this shared information 13c.

As a result, all the wireless units 16-1 to 16-7 provided in the information processing apparatus 10 having the wireless communication function can execute connection processing with other devices by making reference to the shared information 13c in the RAM 13 in accordance with a direction from the control unit 11. For instance, in the example shown in FIG. 3, when any of the wireless units 16-2 to 16-7 is up to establish ACL link with any other device (Bluetooth device), an "inquiry" does not have to be performed again (each time). That is, the wireless units 16-2 to 16-7 can execute the connection processing by making reference to the information of the "inquiry" result which has been already acquired by the wireless unit 16-1 in the "inquiry", namely, the shared information 13c provided in the RAM 13.

Now, it is assumed that a given wireless unit 16-1 in the plurality of wireless units 16-1 to 16-7 provided in the information processing apparatus 10 is up to establish ACL link to another first device (which is determined as a Bluetooth device (1) in this example).

If the wireless unit 16-1 executes an "inquiry" when the information processing apparatus 10 is up to establish ACL link to another second device (which is determined as a Bluetooth device (2) in this example) different from the first device (Bluetooth device (1)), the usage rate of the wireless communication band of the wireless unit 16-1 is increased, which results in a high load. Thus, in order to avoid the problem, any free wireless unit in wireless units 16-2 to 16-7 other than wireless unit 16-1 carries out the "inquiry". As a result, the service band of wireless unit 16-1 does not have to be used for the "inquiry", and hence the ACL link can be easily maintained. At this moment, a result of the "inquiry" executed by any free wireless unit in wireless units 16-2 to 16-7 is provided to the control unit 11 and reflected in the shared information 13c in the RAM 13, thereby the shared information 13c is updated. FIG. 7 shows a communication state (communication load shared state) with each of the other devices in the information processing apparatus 10 in this case.

Determination (selection) of the respective wireless units 16-1 to 16-7 is carried out in accordance with, e.g., the processing procedures shown in FIG. 6 by the control unit 11 making reference to the wireless unit management table 13A in the RAM 13. In the example, the control unit 11 recognizes that wireless unit 16-1 has the ACL link by making reference to the wireless unit management table 13A in the RAM 13. Then, the control unit 11 searches for a free wireless unit in wireless units 16-2 to 16-7, activates the wireless unit and causes it to perform an "inquiry". As a result, the bias of the communication load in the respective wireless units 16-1 to 16-7 is eliminated, and load dispersion is achieved. At this moment, the control unit 11 compares the loads of the respective wireless units 16-2 to 16-7 by making reference to the wireless unit management table 13A (step S1 in FIG. 6). A wireless unit which maintains the lowest load as a result of comparison is searched for (step S2 in FIG. 6). The control unit 11 activates the wireless unit and causes it to perform an "inquiry" (step S3 in FIG. 6). Further, with execution of the "inquiry", the wireless unit management table 13A is updated by setting the flag (see FIG. 5) of the wireless unit management table 13A in the RAM 13 (steps S4 and S5 in FIG. 6).

It is now assumed that a given wireless unit 16-2 in the plurality of wireless units 16-1 to 16-7 provided in the information processing apparatus 10 has ACL link and SCO link with another first device (Bluetooth device (1)). Furthermore, it is assumed that wireless unit 16-1 also has an ACL link with another third device (Bluetooth device (3)).

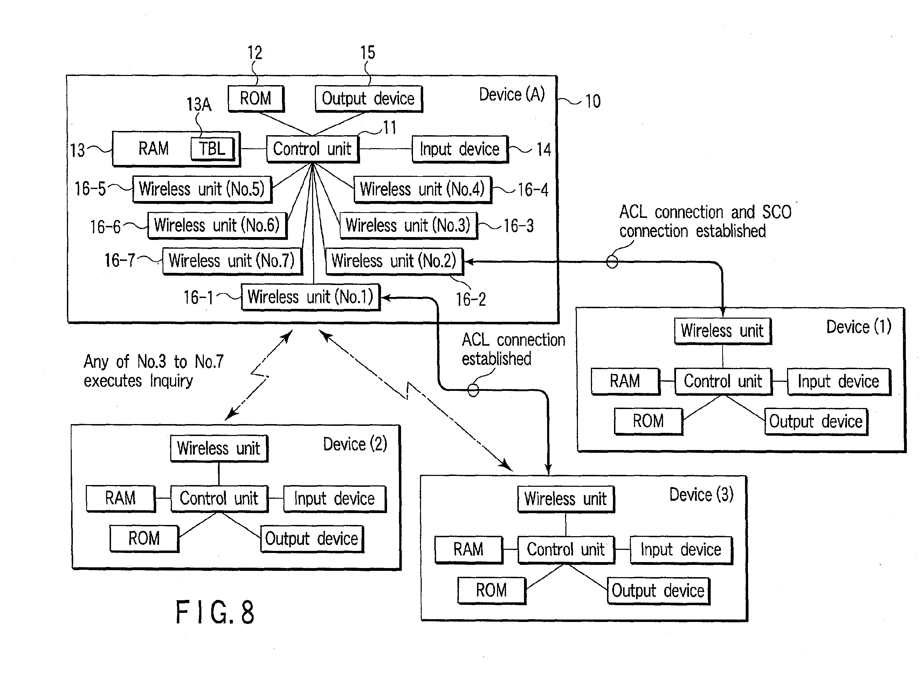

Comparing the usage rates of the bands of the respective wireless units 16-1 to 16-7, wireless unit 16-2 having the SCO link has the highest load. In this case, therefore, any of the wireless units 16-1, 16-3 to 16-7 having no SCO link carries out the "inquiry". As a result, the service band of wireless unit 16-2 does not have to be used for the "inquiry". Consequently, the ACL link and the SCO link are easily maintained. FIG. 8 shows a communication state (communication load shared state) with each of other devices in the information processing apparatus 10 in this case.

It is now assumed that a given wireless unit 16-2 in the plurality of wireless units 16-1 to 16-7 provided in the information processing apparatus 10 has an ACL link with another first device (Bluetooth device) and performs ACL data communication. Moreover, it is assumed that wireless unit 16-1 also has an ACL link with another third device (Bluetooth device (3)).

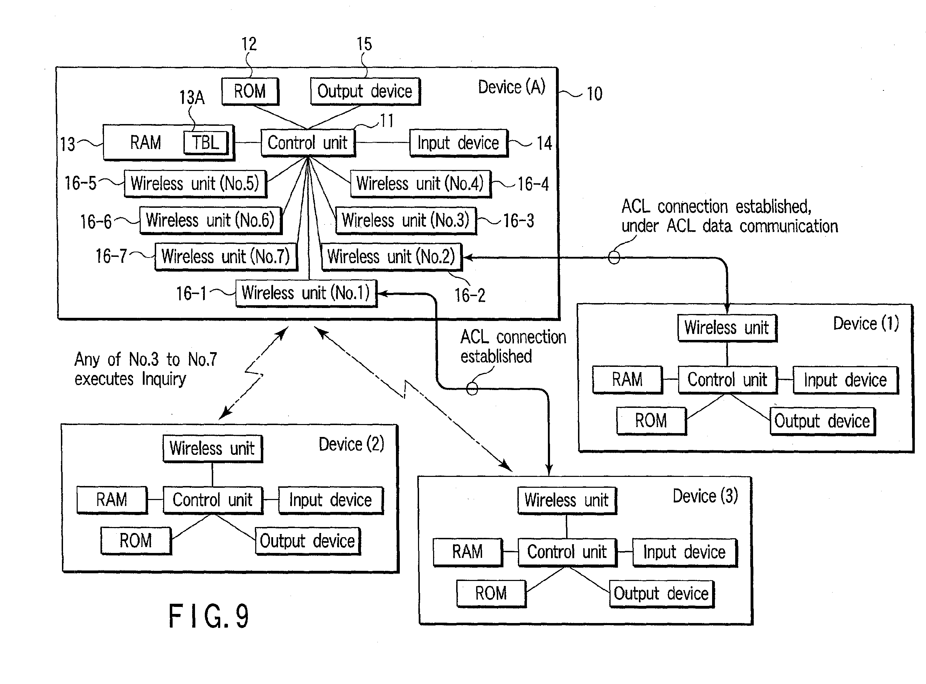

Comparing the usage rates of the bands of the respective wireless units 16-1 to 16-7, wireless unit 16-2 performing the ACL data communication has the highest load. In addition, wireless unit 16-1 having an ACL link has the second highest load. The remaining wireless units 16-3 to 16-7 have no load applied thereto. In this case, therefore, any of the remaining wireless units 16-3 to 16-7 carries out an "inquiry". As a result, the service band of wireless unit 16-2 does not have to used for the "inquiry". Consequently, the ACL data communication can be easily maintained. FIG. 9 shows the communication state (communication load shared state) with each of the other devices in the information processing apparatus 10 in this case.

It is to be noted that this embodiment takes a device structure in conformity with Bluetooth as an example, but the present invention is not restricted thereto and the system may be based on any short-distance (near-distance or short-range) wireless communication standard other than Bluetooth.

As described above, according to the embodiment, in the system comprising a plurality of devices each including wireless units capable of two-way communication, the frequency band given to each of the devices can be effectively exploited and more information can be efficiently transmitted. As a result, a system with the improved functionality and performance can be readily configured. Specifically, by applying the device structure of the present invention to Bluetooth, it is possible to efficiently communicate with many more active slave devices than defined in the Bluetooth standard. Further, the Bluetooth device can be more flexibly operated by sharing information with a plurality of Bluetooth modules prepared on one Bluetooth device and switching the function.

## Claims

1. A wireless communication device capable of two-way communication, **characterized by** comprising:
a plurality of wireless units (16), each of which can operate individually and has an equivalent function; and
a control unit (11) which has an information management apparatus which stores and manages information acquired by any of the plurality of wireless units (16) in such a manner that the information can be utilized by all of the plurality of wireless units (16), and controls the plurality of wireless units (16).

2. A wireless communication device according to claim 1, **characterized in that** each of the plurality of wireless units (16) includes:
an RF transceiver (161) which performs first processing to receive a first wireless signal in accordance with a predetermined frequency and demodulate the first wireless signal into a first baseband signal and second processing to modulate a second baseband signal and transmit the second baseband signal as a second wireless signal in accordance with a predetermined communication frequency;
a baseband chip (162) which performs third processing to put a first data from a host layer protocol into a payload of a packet and convert the packet into a third baseband signal and fourth processing to extract a second data of a payload part of a packet required for the host layer protocol from the signal received by the RF transceiver (161); and
a host controller (163) which controls each of previously arranged link layers including the host layer and transfers control information and the first data to the control unit (11),
wherein the plurality of wireless units (16) exchange information with other communication devices by using circuit switching type and packet switching type communication links.

3. A wireless communication device according to claim 1, **characterized in that** the information management apparatus stores and manages information acquired by an inquiry from any of the plurality of wireless units (16) to a device existing therearound as information shared by all of the plurality of wireless units (16) in such a manner that all of the plurality of wireless units (16) can make reference to the information.

4. A wireless communication device according to claim 1, **characterized in that** the information management apparatus stores and manages information acquired by an inquiry from any of the plurality of wireless units (16) to a device existing therearound as information shared by all of the plurality of wireless units (16) in such a manner that all of the plurality of wireless units (16) can make reference to the information, and
the wireless unit (16) executes connection processing by making reference to the information which is stored and managed by the information management apparatus and acquired by the inquiry.

5. A wireless communication device according to claim 1, **characterized in that** the control unit (11) has a table (13A) indicative of a current communication state of each of the plurality of wireless units (16), and has a control apparatus which determines a unit to perform communication connection from the plurality of wireless units (16) by making reference to the table (13A) when executing processing of communication connection.
